# EUROPEAN PATENT SPECIFICATION

(11) **EP 1 030 773 B1**
(45) Date of publication and mention of the grant of the patent: **30.10.2002**
(21) Application number: 97948259.3
(22) Date of filing: 14.11.1997
(51) Int. Cl.: B29D 30/06, B29C 31/00, B29C 33/20

(54) **TIRE CURING SYSTEM AND METHOD**
ANLAGE UND VERFAHREN ZUM VULKANISIEREN VON REIFEN
SYSTEME ET PROCEDE DE VULCANISATION

(43) Date of publication of application: 30.08.2000
(73) Proprietor: THE GOODYEAR TIRE & RUBBER COMPANY, Akron, Ohio 44316-0001 (US)
(72) Inventor: STEIDL, Larry, Eugene, Akron, OH 44305 (US); STOILA, George, Michael, Jr., Akron, OH 44278 (US)
(74) Representative: Leitz, Paul
(86) International application number: US9720655
(87) International publication number: WO99025542

(56) References cited:
- EP-A- 0 510 332
- EP-A- 0 712 704
- EP-A- 0 754 530
- DE-A- 19 618 084
- DE-B- 1 204 814
- FR-A- 2 619 337
- US-A- 5 631 028
- US-A- 5 741 528
- PATENT ABSTRACTS OF JAPAN vol. 095, no. 008, 29 September 1995 & JP 07 117055 A (KOBE STEEL LTD), 9 May 1995, & US 5 746 964 A (URESHINO ET AL.) 5 May 1998

## Description

### Technical Field

This invention pertains to the art of methods and apparatuses for the production of pneumatic tires, and more specifically, to methods and apparatuses for a self-locking mold cure system.

### Background Art

It is well known in the art to cure, i.e., vulcanize, green tires using a tire press. Typically tire presses use molds comprising top and bottom mold halves, within which the green tire is cured. The tire press includes devices for opening the mold, that is, lifting the top mold half from the bottom mold half, loading the green tire into the bottom mold half, and closing the top mold half upon the bottom mold half, thereby encasing the green tire within the tire mold. Heat mediums, such as steam, are then transferred to the mold from the outside of the mold as well as from the inside. A tire bladder is inserted inside the mold and the green tire and is used both to cure and to shape the green tire. Once the green tire is cured, the tire press then opens, that is, lifts the top mold from the bottom mold, revealing a cured tire which is then unloaded from the tire press. This cycle can be repeated as often as required.

One of the problems with this conventional type of tire press is that many devices are underutilized. The mold closing device, for example, closes the mold then sits idle while the green tire is cured. Only after the green tire is cured and unloaded and another green tire is loaded can the mold closing device be used again. The mold opening device, the green tire loading device and the cured tire unloading device are similarly underutilized. This means that the capital resources necessary for such tire presses are not being economically used.

Many attempts have been made to reduce these problems. For example, U.S. Patent No. 3,932,079 to Legostave et al., discloses a tire vulcanizing apparatus that includes a series of vulcanizing presses arranged in a row. In short, Legostave et al. disclose an attempt at using a conventional tire press and moving it along rails over a line of tire molds. One of the problems associated with this apparatus are that the molds cannot be treated individually, but only in couplets of two. Another problem is that there is no provision for an independent loading device or a take-away conveyor. What is needed is a more flexible tire curing system.

U.S. Patent No. 4,728,274 to Siegenthaler discloses a tire curing apparatus in which a number of mobile curing units are selectively moved along a loop circuit. This leads to a complex transport system for the mobile curing units.

US-A- 5 622 669 to Dailliez et al. discloses a tire vulcanization apparatus in which tire molds are transferred from a loading/unloading device into a chamber that receives several tire molds. The loading/unloading device is stationary. This apparatus makes it difficult to cure tires having different cure cycle times.

EP-A- 0 510 332 describes a mold changing apparatus including a row of mold stations, a movable manipulator, and a mold preparing station provided within the row of mold stations. To use this apparatus, each mold must be carried by forklift or crane to each mold station. The manipulator combines the functions of opening/closing molds and loading/unloading tires. This combined use leads to operational inefficiencies.

The present invention provides methods and apparatuses for curing tires using a self-locking mold cure system with shared mold open, unload, load and close devices. The difficulties inherent in the art are therefore overcome in a way that it is simple and efficient, while providing better and more advantageous results.

### Disclosure of the Invention

The invention relates to a tire curing system, a method for curing a first green tire using a curing system having four horizontally spaced parallel process lines with a plurality of stations along each process line, a segmented tire mold and a method for locking a mold as defined in the claims.

### Brief Description of Drawings

Figure 1 is a sectional elevation view of the tire curing system of this invention taken along line 1-1 in Fig. 2 showing the manipulator and the robot.
Figure 2 is a plan view of the tire curing system of this invention showing the stations along each process line.
Figure 3 is a partial elevation view showing the center-mechanism used to insert the bladder within the tire mold.
Figure 4 is a partial elevation view showing how the curing services are supplied to the movable can assembly.
Figure 5 is a fragmentary perspective side view of the segmented mold of this invention showing the top plate, the bottom plate and some of the segments.
Figure 6 is a perspective side view of the segmented mold of Figure 5 but also showing the bolster and lock plate.
Figure 7 is a perspective side view of the segmented mold of Figure 5 but also showing the actuator mechanism and the lock mechanism.

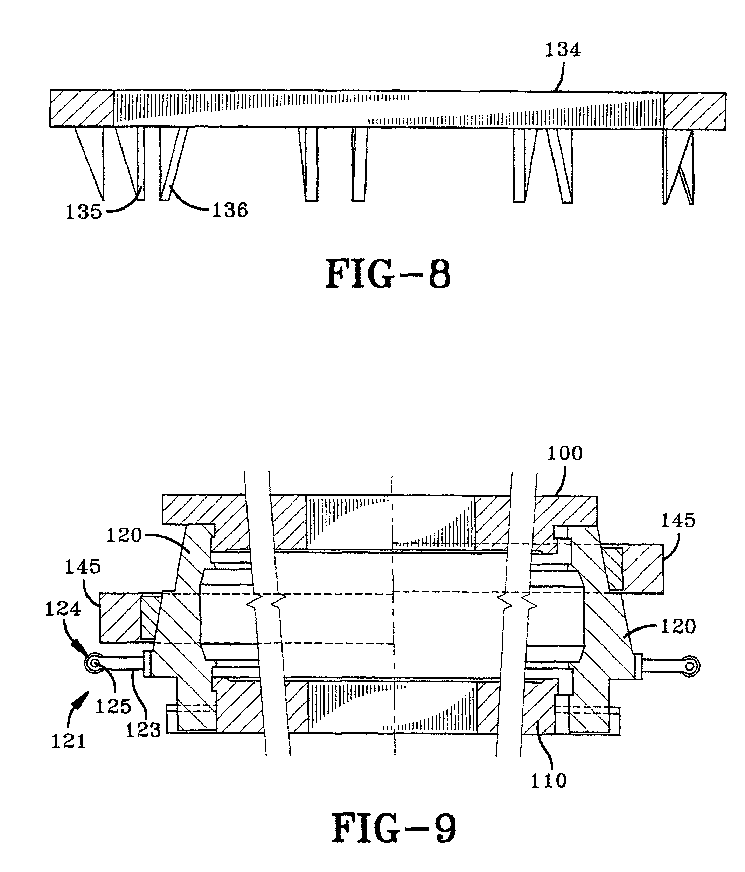

Figure 8 is a sectional view of the actuator ring showing the actuator wedges.
Figure 9 is a sectional view of the self-locking segmented tire mold of this invention showing the segmented mold in a fully closed position and the lock ring in a locked position on the left side of the Figure and showing the segmented mold in partially open position and the lock ring in an un-locked position on the right side of the Figure.
Figure 10 is a schematic elevation view of the take-away conveyor showing an upper belt conveyor and a lower level with an inclined roller conveyor.

### Detailed Description of the Invention

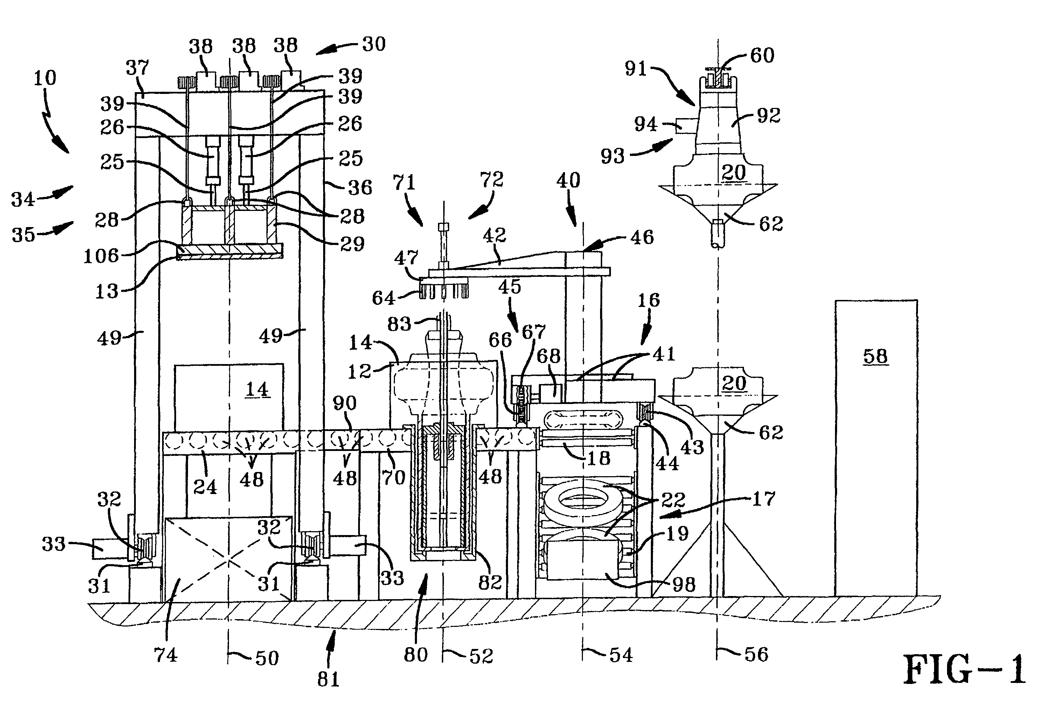

Referring now to the drawings wherein the showings are for purposes of illustrating a preferred embodiment of the invention only and not for purposes of limiting the same, Figures 1-2 show a tire curing system 10 for use in curing a green tire 20 into a cured tire 22 using a tire mold 12 that has a top mold half 13 and a bottom mold half 14. It is to be understood that the green tire 20 can be any type of tire such as that required to make a passenger tire, a truck tire, an airplane tire or other tires as well.

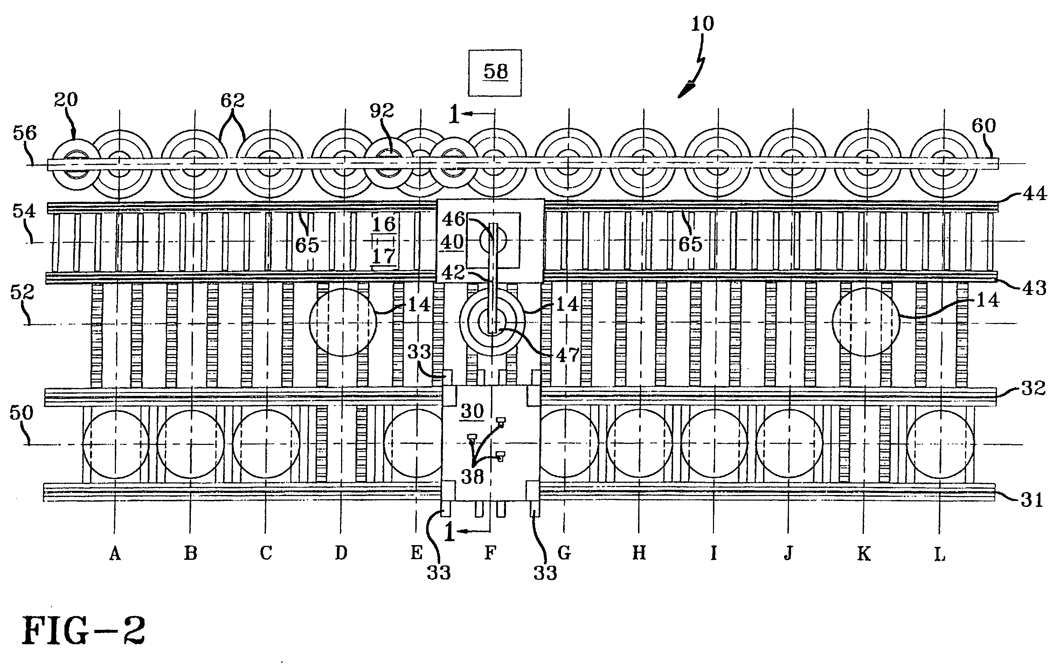

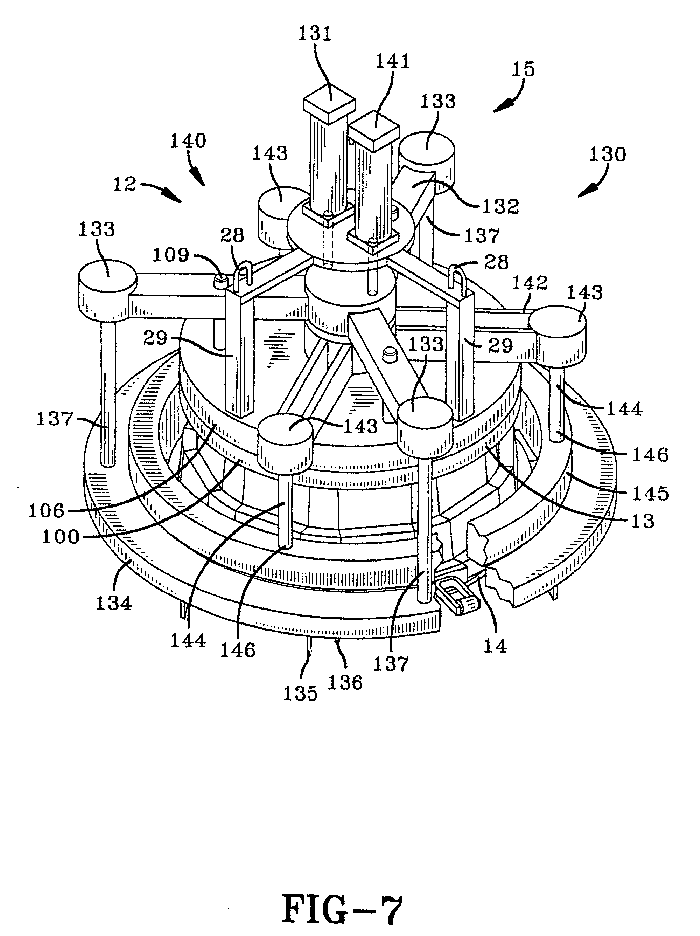

With continuing reference to Figures 1 and 2, the tire curing system 10 of this invention includes transporting means 91 for transporting green tires 20 to the tire curing system 10, loading means 71 for loading green tires 20 into the bottom mold half 14, mold closing means 34 for closing the top mold half 13 onto the bottom mold half 14, self-locking means 15, as shown in Figure 7, for locking each mold 12 during the curing process, curing means 81 for curing the green tires 20, mold opening means 35 for opening the mold 12, unloading means 72 for unloading cured tires 22 from the mold 12 and take-away means 17 for taking the cured tires 22 away from the tire curing system 10. Controls for the various components of the tire curing system 10 may be centralized within a control panel 58.

Still referring to Figures 1 and 2, in the preferred embodiment the tire curing system 10 is arranged around four horizontally spaced, substantially parallel process lines, identified as a manipulator process line 50, a mold load-unload process line 52, a robot tire handling line 54 and a green tire delivery process line 56. As best seen in Figure 2, each process line has a number of stations A-L. Thus, each process line has first station A through a twelfth station L. It should be noted that the exact number of stations can be determined using sound engineering judgment. In this preferred embodiment, 12 stations are provided so that any ten stations can be used for curing the green tires 20, leaving two stations available for servicing or replacing of the tire molds 12 or for any maintenance needs.

With reference to Figure 1, it should be noted that the manipulator process line 50 and the mold load-unload process line 52 could, in fact, be a single process line. In other words, the loading means 71, the mold closing means 34, the curing means 81, the mold opening means 35, and the unloading means 72 could all be included in a single process line. This would be the case, for example, if an arm 42 of a later to be described robot 40 moved under the top mold half 13 (the top mold half 13 being held by a later to be described manipulator 30), to load green tires 20 and unload cured tires 22 from the bottom mold half 14 while the bottom mold half 14 was stationed along the manipulator process line 50. In the present embodiment, the manipulator 30 is positioned horizontally spaced (on the manipulator process line 50) from the mold load-unload process line 52 to decrease the required height of the manipulator 30.

With reference now to Figures 1 and 2, the transporting means 91 preferably includes a monorail 60 running along the green tire delivery process line 56. Slidably connected to the monorail 60 area plurality of green tire carriers 92 each of which selectively holds a green tire 20. The green tire carriers 92 are transported along the monorail using carrier driving means 93, which can be of any type chosen with sound engineering judgment. In the preferred embodiment, the carrier driving means 93 comprises a driving motor 94 operatively connected to each green tire carrier 92 making each green tire carrier 92 self propelled. The green tire carriers 92 transport the green tires 20 along the green tire delivery process line 56 and then deposit the green tires 20 on pans 62 where they await the curing process as will be discussed below. The pans 62 can be vertically height adjusted in order to maintain the green tire 20 at a predetermined height. With continuing reference to Figures 1 and 2, the robot 40 may be a 6-axes industrial robot mounted on a platform or base 41 that is self propelled. The self propelled platform 41 may have platform rollers 43 movable on platform rails 44 with at least one of the platform rollers 43 having gear teeth for engagement by teeth on a driving gear 67 mounted on the platform 41 and driven by a motor 68. Thus, the robot 40 is slidably mounted to the platform rails 44 that run along the robot tire handling line 54. Controls that may be within the control panel 58 are provided to rotate the driving gear 67 the desired amount and in the desired direction along the robot tire handling line 54 so as to move the platform 41 to the desired station. An encoder strip 65, shown in Figure 2, may be provided on the platform rail 44 to indicate the location of the platform 41 and the robot 40.

Still referring to Figures 1 and 2, it is preferred that the robot 40 includes both the loading means 71 for loading green tires 20 and the unloading means 72 for unloading cured tires 22. The robot 40 has an arm 42 that is rotatably mounted on the platform 41 and selectively pivots about pivot point 46. The arm 42 includes a tire gripper 47 that may have movable fingers 64 for gripping the green tire 20 and the cured tire 22. To load a green tire 20, the arm 42 pivots until the tire gripper 47 of the arm 42 is in position to grip a green tire 20 from a pan 62. The arm 42 then pivots about 180° till the green tire 20 is positioned over the bottom mold half 14. The bottom mold half 14, at this point, is positioned on the mold load-unload process line 52. The arm 42 is then lowered and the tire gripper 47 releases the green tire 20 into the bottom mold half 14. To unload a cured tire 22, the arm 42 pivots until the tire gripper 47 of the arm 42 is in position to grip a cured tire 22 from the bottom mold half 14. The arm 42 then pivots about 90° till the cured tire 22 is positioned over the take-away means 17. The arm 42 is then lowered and the tire gripper 47 releases the cured tire 22 onto the take-away means 17.

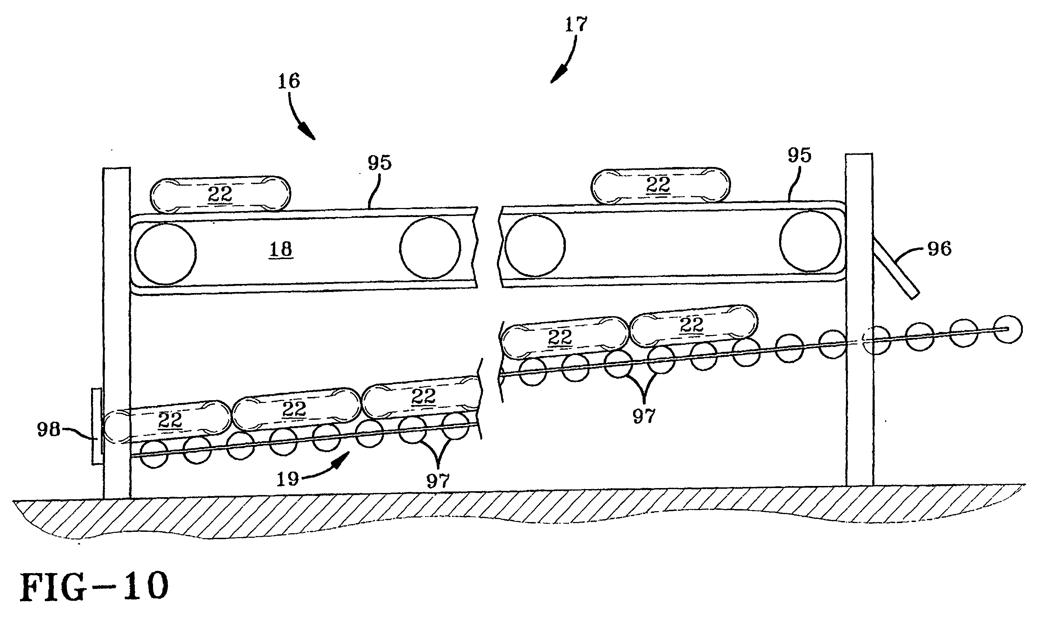

With reference now to Figures 1, 2 and 10, the take-away means 17 takes the cured tires 22 out of the tire curing system 10 and is preferably positioned, like the robot 40, along the robot tire handling line 54. Preferably, the take-away means 17 includes a take-away conveyor 16 that has upper and lower levels 18, 19 as shown in Figures 1 and 10. In the preferred embodiment, the cured tires 22 are conveyed along the upper level 18 and then dropped to the lower level 19 using a tire transfer member 96 operatively connected to the upper level 18 before they are conveyed out of the tire curing system 10. This clears the upper level 18 and provides time for the cured tires 22 to properly cool on the lower level 19 before they are sent for further processing. It also provides time to ventilate any fumes that may occur. The upper level 18 may be a driven conveyor belt 95 and the lower level 19 may be a tilted conveyor, as shown in Figure 10, comprising conveyor rollers 97. A stop member 98 that is operatively connected to the lower level 19 may be used to hold the cured tires 22 on the lower level 19 until it is desired to remove them.

Referring to Figures 1 and 2, it is preferred that the manipulator 30 includes both the mold closing means 34 and the mold opening means 35. The manipulator 30 may be a gantry 36 having side frames 49 on gantry rollers 32 supported on manipulator rails 31 that run along the manipulator process line 50. Manipulator driving means 33 such as individual drive motors 33 may be mounted on at least two of the gantry side frames 49. The drive motors 33 are used to selectively drive the gantry 36 along the manipulator process line 50. A manipulator process line table 24, supports the bottom mold halves 14 on rollers 48 that are rotatable by any rotating means commonly known in the art, while the manipulator 30 raises and lowers the top mold halves 13 with respect to the bottom mold halves 14. In this way the tire mold 12 is opened and closed. The manipulator 30 has a top member 37 with hoists 38 for selectively raising and lowering an attachment frame 29. Hoist cables 39 operatively connect the hoists 38 to hooks 28 that are mounted to the attachment frame 29. The attachment frame 29 is selectively attached to any top mold half 13 to be raised or lowered. Coordination of the drives of the hoists 38 guide the top mold half 13 in a substantially level manner as the top mold half 13 is raised and lowered.

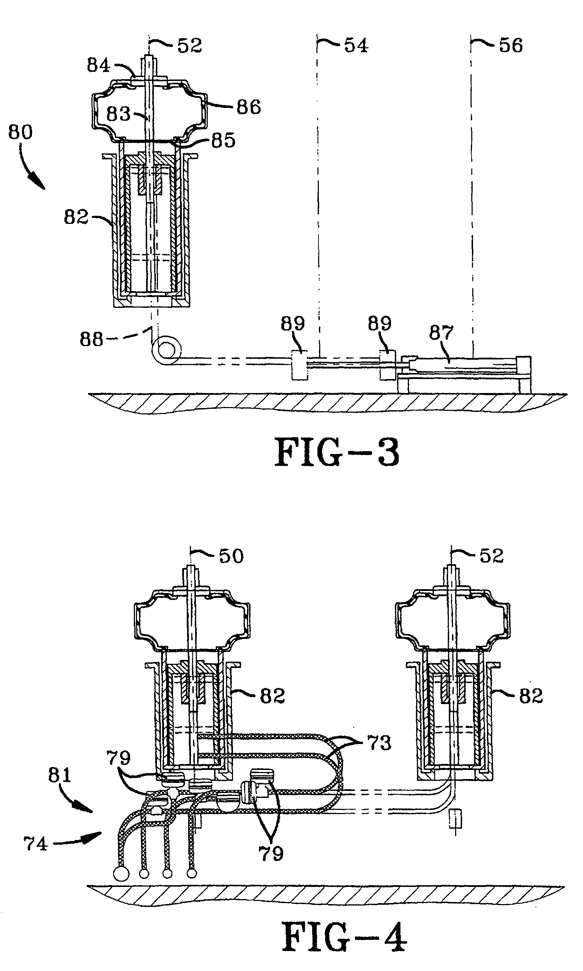

Referring now to Figures 1-3, the curing means 81 includes a mold load-unload table 70 that also has rollers 48 that are rotatable by any rotating means commonly known in the art. The mold load-unload table 70 is for holding the bottom mold half 14 while the green tire 20 is being loaded into the bottom mold half and while the cured tire 22 is being unloaded from the bottom mold half. A transport conveyor 90 also having rollers 48 that are rotatable by any rotating means commonly known in the art, is used to transport the bottom mold halves 14 back and forth between the mold load-unload table 70 and the manipulator process line table 24. Below the mold load-unload table 70, at each station, is a center-mechanism 80 that includes a can assembly 82, a center post 83, a top ring 84 and a bottom ring 85. These components are used to position a bladder 86 within the green tire 20 (and therefore within the tire mold 12). The bladder 86 is used, as is commonly known in the art, to both cure and shape the green tire 20. The operation of the center-mechanism 80 is known in the art and thus will not be discussed in any detail herein. However, it is preferred that the center-mechanisms 80 are selectively moveable between the manipulator process line 50 and the mold load-unload process line 52. This permits the shaping of the green tire 20 to begin as soon as the green tire 20 has been placed inside the bottom mold half 14 and to continue while the bottom mold half 14 is moved to the manipulator process line 50. To make each center-mechanism 80 moveable, a piston cylinder 87 is operatively connected to a chain 88 using a quick connect coupling 89. The chain 88 is rigid against counter-clockwise bends and is used to operate the can assembly 82. The quick connect coupling 89 permits the piston cylinder 87 to operate the can assembly 82 while the center-mechanism 80 is positioned at the mold load-unload process line 52. Then, when the bottom mold half 13 along with the center-mechanism 80 is moved to the manipulator process line 50, the chain 88 simply disconnects at the quick connect coupling 89. After the green tire 20 has been cured and it is necessary to move the bottom mold half 13 and the center-mechanism 80 back to the mold load-unload process line 52, the chain 88 re-connects at the quick connect coupling 89.

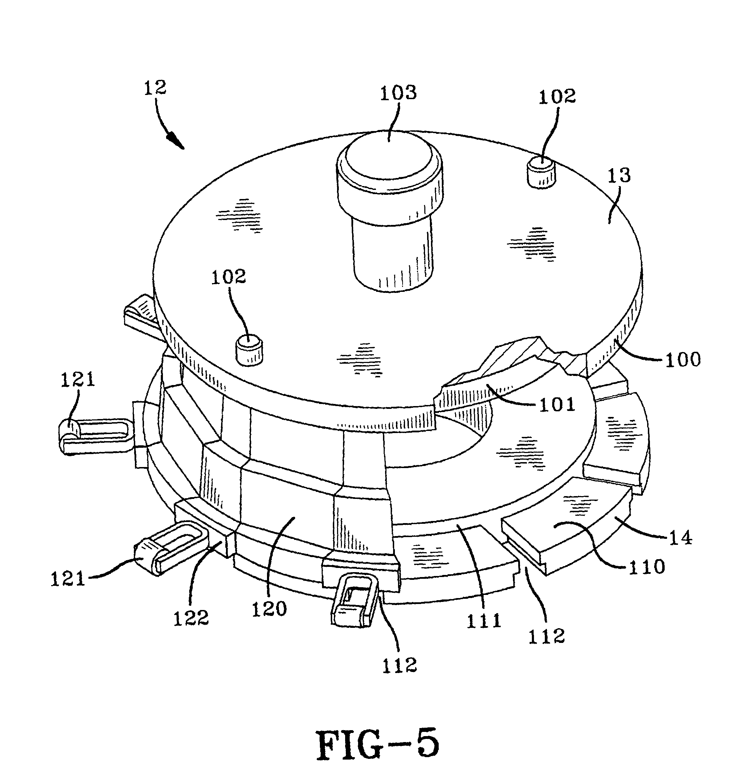

With reference now to Figures 1, 2 and 4, the curing means 81 also includes curing services 74 that may include several supply and drain headers for fluid means used to provide appropriate temperatures and pressures. Of course the appropriate curing services 74 can be any chosen with sound engineering judgment. Such curing services 74 are controlled using control valves 79 and are provided to service the bladder 86 as well as the tire mold 12. The use of such curing services 74 is considered known in the art and thus will not be discussed in any detail herein. What should be noted, however, is that since curing begins when the bottom mold half 14 is on the mold load-unload process line 52 and continues when the bottom mold half 14 is on the manipulator process line 50, the curing services 74 are supplied using flexible hosing 73. Preferably, the flexible hosing 73 is positioned between the control valves 79 and the bladder 86 or tire mold 12.

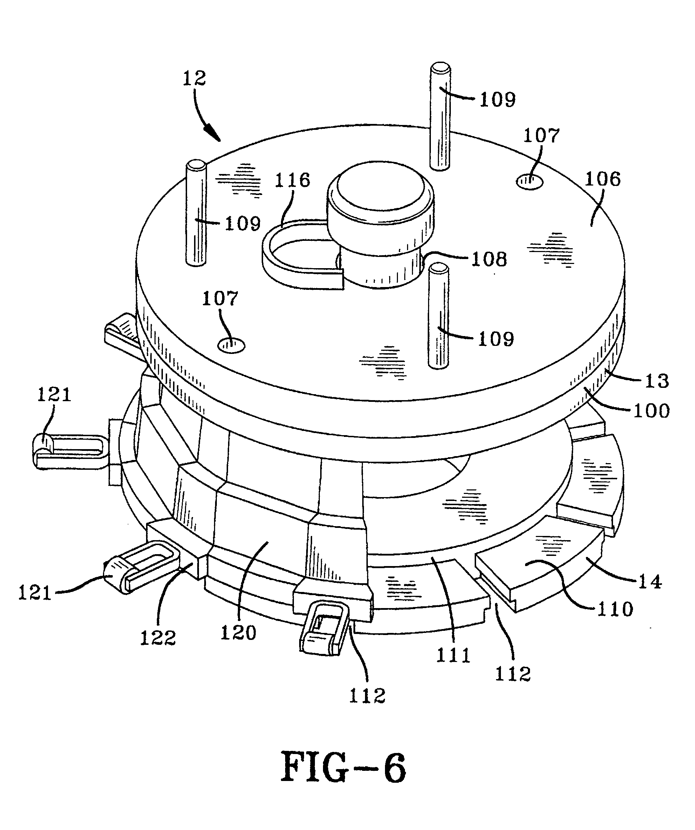

With reference now to Figures 1 and 5-7, the mold self-locking means 15 locks the top mold half 13 to the bottom mold half 14 during the curing process without the need for additional support. Thus, the manipulator 30 can be moved anywhere along the manipulator process line 50 that may be required while the green tire 20 within the tire mold 12 continues to cure. Any tire mold 12 chosen with sound engineering judgment can be used with this invention but, in the preferred embodiment the tire mold 12 is a mold known as a segmented mold. The top mold half 13 of the segmented mold 12 includes a top plate 100 having an integral platen 101. The platen 101 is a self-contained chamber for holding a heating medium such as steam or water for use in curing the green tire 20. The top mold half 13 has a central mushroom pilot 103 and side pilots 102 for use in centering and angularly orienting the top mold half 13. A bolster 106 is fixedly attached to the attachment frame 29 and is operatively connected to the top mold half 13 and has a central mushroom pilot hole 108 and side pilot holes 107 that receive the mushroom pilot 103 and side pilots 102 respectively of the top plate 100. In this way the top mold half 13 can be properly aligned with the attachment frame 29 of the manipulator 30 so that the top mold half 13 can be properly placed onto the bottom mold half 14.

Still referring to Figures 1 and 5-7, attached to the top portion of the bolster 106 is a plurality of guide rods 109. The guide rods 109 are used to align and attach a later to be described actuator frame 132 and a later to be described lock frame 142. A plurality of cylinders 26 attached to the top member 37 of the gantry 36 have piston rods 25 that extend down to the attachment frame 29 thereby stabilizing the attachment frame 29 as it is moved with the gantry to different stations, The bottom mold half 14 of the segmented mold 12 includes a bottom plate 110 having an integral platen 111 and a plurality of tread forming segments 120. Each of the segments 120 is mounted to a slide block 122 that slides radially within a radial slot 112 in the bottom plate 110. Each of the segments 120 has a cam-follower actuator 121 for use in sliding the segment as will be discussed further below. A horseshoe shaped lock plate 116 structurally links the tire mold 12 to an actuator ring 134 that will be discussed further below.

Still referring to Figures 1 and 5-7, to close the top mold half 13 onto the bottom mold half 14, an actuator mechanism 130 is used. The actuator mechanism 130 includes an actuator cylinder 131, an actuator frame 132 having actuator motors 133 and the actuator ring 134. The actuator ring 134 has first and second actuator wedges 135, 136 for use in engaging each cam-follower actuator 121 on each segment 120. To close the segmented mold 12, the actuator cylinder 131 lowers the actuator frame 132 until each of the first actuator wedges 135 engages the corresponding cam-follower actuator 121. The actuator motors 133 are then driven causing actuator rods 137 to rotate. The rotation of the actuator rods 137 causes the actuator ring 134 to rotate about the segmented mold 12. At least one of the actuator rods 137 may have gear teeth for engagement with teeth on the actuator ring 134. As the actuator ring 134 rotates, the first actuator wedges 135 engage the cam-follower actuators 121 causing the segments 120 to slide inwardly, thereby closing the segmented mold 12. The amount of rotation of the actuator ring 134 required to close the segmented mold 12 can be any amount chosen with sound engineering judgment but is preferably within the range of 5° to 15°. Once the segmented mold 12 has been closed, the actuator mechanism 130 can be lifted by the actuator cylinder 131 away from the segmented mold 12. To open the segmented mold 12, the actuator rods 137 are rotated in the opposite direction causing the actuator ring 134 to also rotate in the opposite direction. As the actuator ring 134 rotates, the second actuator wedges 136 engage the cam-follower actuators 121 causing the segments 120 to slide outwardly, thereby opening the segmented mold 12.

With continuing reference to Figures 1 and 5-7, to lock the top mold half 13 to the bottom mold half 14, a lock mechanism 140 is used. The lock mechanism 140 is the preferred self-locking means 15 for this invention. The lock mechanism 140 includes a lock cylinder 141, a lock frame 142 having lock motors 143, lock rods 144 with quick connect couplings 146 and a lock ring 145. To lock the segmented mold 12, the lock cylinder 141 lowers the lock frame 142 until the lock ring 145 is positioned around the segmented mold 12. This locks the segmented mold 12 in a closed position. Once the segmented mold 12 has been locked, the lock motors 143 are driven thereby disconnecting the lock rods 144 from the lock ring 145 at the quick connect couplings 146. The quick connect couplings 146 can be of any type chosen with sound engineering judgment as currently known in the art. The lock mechanism 140 can then be lifted by the lock cylinder 141 away from the segmented mold 12. To unlock the segmented mold 12, the lock mechanism 140 is lowered by the lock cylinder 141 so that the lock rods 144 engage the lock ring 145 at the quick connect couplings 146. Next, the lock motors 143 are driven causing the quick connect couplings 146 to connect with the lock rods 144. This re-connects the lock rods 144 with the lock ring 145. The lock cylinder 141 is then raised, lifting the lock ring 145 and thereby unlocking the segmented mold 12.

With reference now to Figures 1-7, the operation of the tire curing system 10 will now be discussed. The green tire 20 is transported to the tire curing system 10 by the green tire carrier 92 that moves along the monorail 60. The green tire 20 is then deposited on a support such as the pan 62 located at the first station A on the green tire delivery process line 56. The pan 62 is raised in a vertical direction to a predetermined hold position as shown in Figure 1. Next, the robot 40 is moved along the robot tire handling line 54 to the first station A. The manipulator 30 is then moved along the manipulator process line 50 to the first station A on the manipulator process line 50. The top mold half 13 is lifted from the bottom mold half 14 with the manipulator 30. Meanwhile, the tire gripper 47 of the arm 42 of the robot 40 grips the green tire 20 and lifts it from the pan 62. The bottom mold half 14 is moved from the manipulator process line table 24 at the first station A on the manipulator process line 50 to the first station A on the mold load-unload process line 52. The green tire 20 is moved, as the arm 42 of the robot 40 pivots from the pan 62 at the first station A on the green tire delivery process line 56 to the first station A on the mold load-unload process line 52. Next, the green tire 20 is placed into the bottom mold half 14. After that operation, the robot 40 can be moved along the robot tire handling line 54 to any other station as required. For example, the robot 40 may be moved to station B where another green tire 20 may be gripped for placement within another bottom mold half 14.

Once the green tire 20 is placed within the bottom mold half 14, the bladder 86 may be inflated to shape the green tire 20 as is commonly known in the art. Before the green tire 20 is fully shaped by the bladder 86, the bottom mold half 14 is moved to the first station A on the manipulator process line 50. The quick connect couplings 89 permit the chain 88 to separate and the can assembly 82 to move with the bottom mold half 14. The top mold half 13 is placed on the bottom mold half 14 with the manipulator 30 as discussed above. The top mold half 13 is then lowered and locked to the bottom mold half 14 for the rest of the curing process. The manipulator 30 is then free to be moved along the manipulator process line 50 to any other station as may be required. For example, the manipulator 20 may be moved to station B where another tire mold 12 may be opened.

Once the green tire 20 has been cured at the first station A, the manipulator 30 is returned along the manipulator process line 50 to the first station A. The top mold half 13 is then unlocked and lifted from the bottom mold half 14 with the manipulator 30 as discussed above. The bottom mold half 14 is then moved to the mold load-unload process line 52. The newly cured tire 22 is gripped by the tire gripper 47 on the arm 42 of the robot 40 which has been moved to the fist station A. The bottom mold half 14 is then either moved to the first station A on the manipulator process line 50 or alternately, it remains at the first station A on the mold load-unload process line 52 where it awaits another green tire 20. The cured tire 22 is moved from the first station A on the mold load-unload process line 52 to the take-away conveyor 16 by the arm 42 of the robot 40.

With reference to Figures 1 and 2, it should be noted that the motion of the robot 40 on the platform 41 is straight line motion. By straight line motion it is meant that the platform 41 moves only along a straight line, that is along the horizontal robot tire handling line 54. Thus, no turning, cornering or vertical adjustment of any type is required. The motion of the manipulator 30 is also straight line motion along the manipulator process line 50. Similarly, the motion of any bottom mold half 14 between the manipulator process line 50 and the mold load-unload process line 52 is straight line motion along the given station line. All such straight line motions are an improvement over non-straight line motions because they minimize motion delays for acceleration and deceleration.

The preferred embodiments have been described, hereinabove. It will be apparent to those skilled in the art that the above methods may incorporate changes and modifications without departing from the general scope of this invention. It is intended to include all such modifications and alterations in so far as they come within the scope of the appended claims or the equivalents thereof.

## Claims

1. A tire curing system (10) having a plurality of molds (12) each having a bottom mold half (14) and a top mold half (13) comprising loading means (71) for loading said green tire (20) into said bottom mold half(14), mold closing means (34) for placing said top mold half (13) over said bottom mold half (14), self-locking means (15) for locking said top mold half (13) to said bottom mold half (14), curing means (81) for curing said green tire (20), mold opening means (35) for removing said top mold half (13) from said bottom mold half (14), unloading means (72) for unloading a cured tire (22) from said bottom mold half (14) and take-away means (17) for taking said cured tire away (22) from said curing system (10), said loading means (71) and said unloading means (72) including a movable robot (40) and said mold closing means (34) and said mold opening means (35) including a movable manipulator (30), wherein the movements of said robot (40) and said manipulator (30) are in a straight line, **characterized by** the curing system
being arranged in at least three horizontally spaced, substantially parallel process lines including,
a first green tire delivery process line (56) for use in delivery of a green tire (20) to said tire curing system (10),
a second robot tire handling process line (54) along which a robot (40) is selectively movable and,
a third manipulator process line (50) along which a manipulator (30) is selectively movable,
a fourth process line including a mold load-unload process line (52) for use in loading green tires (20) into said bottom mold half (14) and for unloading said cured tire (22) from said bottom mold half (14), the manipulator process line (50) and the mold load-unload process line (52) being a single or two adjacent process lines.

2. The tire curing system (10) of claim 1 further **characterized by** said robot tire handling line being positioned between said green tire delivery process line (56) and said mold load-unload process line (52), and said manipulator process line (50) being positioned next to said mold load-unload process line (52).

3. The tire curing system (10) of claim 1 further **characterized by** each of said four process lines having a plurality of stations and each of said four process lines having the same number of said stations.

4. The tire curing system (10) of claim 3 further **characterized by** said bottom mold half (14) being transferable between said manipulator process line (50) and said mold load-unload process line (52).

5. The tire curing system (10) of claim 4 further **characterized by** said curing means (81) including a center-mechanism that is transferable between said manipulator process line (50) and said mold load-unload process line (52) along with said bottom mold half (14).

6. The tire curing system (10) of claim 1 further **characterized by**,
a take-away conveyor (16) assembly for carrying said cured tire away (22) from said tire curing system (10), said take-away conveyor (16) assembly being positioned along said robot tire handling line (54).

7. The tire curing system (10) of claim 6 further **characterized by** said take-away conveyor (16) assembly being positioned below said robot (40) in said robot process line (56).

8. The tire curing system (10) of claim 1 further **characterized by** said bottom mold half (14) including a plurality of segments (120), said top mold half (13) and said bottom mold half (14) forming a segmented mold (12), said manipulator (30) including an actuator mechanism (130) for locking and unlocking said top maid half (13) and said bottom mold half (14), and said actuator mechanism (130) comprising,
an actuator cylinder (131) for raising and lowering said actuator mechanism (130),
an actuator ring (134) selectively sliding said segments inwardly and outwardly,
a first actuator motor for selectively rotating said actuator ring (134),
a first actuator rod (137) operatively connecting said first actuator motor (133) to said actuator ring (134), and,
an actuator frame (132) for supporting said actuator ring (134), said first actuator motor (133) and said first actuator rod (137).

9. The tire curing system (10) of claim 8 further **characterized by** each of said segments having a cam-follower actuator (121) for use in sliding each of said segments, and said actuator ring (134) comprising,
first and second actuator wedges for selectively engaging each of said cam-follower actuators (121).

10. The tire curing system (10) of claim 8 further **characterized by** the amount of rotation of said actuator ring (134) required to open and close the segmented mold (12) being within the range of 5° to 15°.

11. The tire curing system (10) of claim 8 further **characterized by** said manipulator (30) comprising,
an attachment frame (29) for selective attachment to the top mold half (13), said attachment frame (29) having a plurality of hooks (28),
a plurality of hoists (38) for selectively raising and lowering said attachment frame (29), said plurality of hoists (38) being operatively attached to a top member (37) of said manipulator (30),
hoist cables (39) operatively connecting said plurality of hoists (38) to said plurality of hooks (28), and,
a plurality of cylinders have piston rods, selectively extending from said top member (37) of said manipulator (30) to said attachment frame (29) for stabilizing said attachment frame (29) as it is moved with said manipulator (30).

12. A method for curing a first green tire (20) using a curing system having four horizontally spaced substantially parallel process lines with a plurality of stations along each process line, each of said four process lines having the same number of stations, said four process lines including a manipulator process line (50), a mold load-unload process line (52), a robot tire handling line (54), and a green tire delivery process line (56), **characterized by** the method comprising the steps of:
depositing the first green tire (20) at a first station on the green tire delivery process line (56);
moving a robot (40) along said robot tire handling line (54) to a first station on the robot tire handling line (54);
moving a manipulator (30) along the manipulator process line (50) to a first station on the manipulator process line (50);
lifting a first top mold half (13) from a first bottom mold half (14) positioned at said first station on the manipulator process line (50) with said manipulator (30);
moving said first bottom mold half (14) to a first station on the mold load-unload process line (52);
placing said first green tire (20) on said first bottom mold half (14) with said robot (40);
moving said robot (40) along said robot tire handling line (54) as required;
moving said first bottom mold half (14) to said first station on said manipulator process line (50);
placing said first top mold half (13) onto said first bottom mold half (14) with said manipulator (30);
moving said manipulator (30) along said manipulator process line (50) as required;
vulcanizing the first green tire (20) into a first cured tire;
moving said manipulator (30) along said manipulator process line (50) to said first station on said manipulator process line (50);
lifting said first top mold half (13) from said first bottom mold half (14) with said manipulator (30);
moving said robot (40) along said robot tire handling line (54) to said first station on said robot tire handling line (54);
moving said first bottom mold half (14) to said first station of said mold load-unload process line (52);
removing said first cured tire from said first bottom mold half (14) with said robot (40);
moving said first bottom mold half (14) to said first station on said manipulator process line (50); and,
placing said first cured tire on a take-away conveyer (16)with said robot (40).

13. The method of claim 12 further **characterized by**, before the step of depositing said first green tire (20) at a first station on the green tire delivery process line (56), the method comprises the step of,
carrying said green tire (20) to said curing system on a monorail (60) that runs alongside said green tire delivery process line (56).

14. The method of claim 12 further **characterized by**, before the step of moving said first bottom mold half (14) to said first station on said manipulator process line (50), the method comprises the step of,
beginning to shape said first green tire (20) with a bladder (86).

15. The method of claim 12 further **characterized by**, after the step of placing said first top mold half over (13) said first bottom mold half (14) with said manipulator (30), the method comprises the step of,
locking said first top mold half (13) to said first bottom mold half (14) with said manipulator (30).

16. The method of claim 12 further **characterized by** after the step of moving said robot (40) along said robot tire handling line (54) the method comprises the steps of,
depositing a second green tire (20) at a second station on said green tire delivery process line (56); and,
moving said robot (40) along said robot tire handling line (54) to a second station on said robot tire handling line (54).

17. The method of claim 16 further **characterized by** after the step of moving said manipulator (30) along said manipulator process line (50) to said first station, the method comprises the steps of,
moving said manipulator (30) along the manipulator process line (50) to a second station on the manipulator process line (50);
lifting a second top mold half (13) from a second bottom mold half (14) positioned at said second station on the manipulator process line (50) with said manipulator (30);
moving said second bottom mold half (14) to a second station on said mold load-unload process line (52);
placing a second green tire (20) into said second bottom mold half (14) with said robot (40);
moving said second bottom mold half (14) to said second station on said manipulator process line (50);
placing said second top mold half (13) over said second bottom mold half (14) with said manipulator (30);
moving said manipulator (30) along said manipulator process line (50) as required; and,
vulcanizing said second green tire (20) into a second cured tire.

18. The method of claim 17 further **characterized by**, after the step of placing said first cured tire (22) onto a take-away conveyer (16) with said robot (40), the method comprises the steps of,
moving said manipulator (30) along the manipulator process line (50) to said second station on said manipulator process line (50);
lifting said second top mold half (13) from said second bottom mold half (14) with said manipulator (30);
moving said robot (40) along said robot tire handling line (54) to said second station;
moving said second bottom mold half (14) to said second station on said mold load-unload process line (52);
removing a second cured tire (22) from said second bottom mold half (14) with said robot (40);
moving said second bottom mold half (14) to said second station on the manipulator process line (50); and,
placing the second cured tire (22) onto a take-away conveyer 916) with said robot (40).

19. A segmented tire mold (12) comprising a top mold half (13) and a bottom mold half (14) including a plurality of segments (120) and self-locking means (15) for selectively locking said top mold half (13) to said bottom mold half (14), said self-locking means (15) being **characterized by**,
a lock frame (142),
a first lock motor (143) supported by said lock frame (142),
a first lock rod (144) rotatably connected to said first lock motor (143) and including a quick connect coupling (146),
a lock ring (145) for use in preventing said segments (120) from sliding outwardly, said lock ring (145) being selectively connected to said first lock rod (144) at said quick connect coupling (146), and,
a lock cylinder (141) operatively connected to said lock frame (142) for use in selectively raising and lowering said lock frame (142), said first luck motor (143), said first lock rod (144) and said lock ring (145), said lock cylinder (141) thereby selectively placing said lock ring (145) around said segmented tire mold (12).

20. The segmented tire mold (12) of claim 19 further **characterized by**,
second and third lock motors (143) supported by said lock frame (142),
second and third lock rods (144) rotatably connected to said second and third lock motors (143) respectively, said second and third lock rods (144) each including a quick connect coupling (146),
wherein said lock ring (145) is selectively connected to said second and third lock rods (144) at said quick connect couplings (146), and,
wherein said lock cylinder (141) selectively raises and lowers said second and third lock motors (143) and said second and third lock rods (144).

21. A method for locking a maid (12) with a bottom mold half (14) having a plurality of segments (120) and a top mold half (13), **characterized by** the steps of,
providing a locking mechanism (140) that includes a lock frame (142), a first lock motor (143) supported by said lock frame (142), a first lock red (144) rotatably connected to said first lock motor (144) and including a quick connect coupling (146), a lock ring (145) selectively connectable to said first lock rod (144) at said quick connect coupling (146), and a lock cylinder (141) operatively connected to said lock frame (142),
lowering said lock frame (142) until said lock ring (145) is positioned around said plurality of segments (120),
driving said first lock motor (143) thereby rotating said first lock rod (144) and disconnecting said first lock rod (144) from said lock ring (145) at said quick connect coupling (146), and,
lifting said locking mechanism (140) away from the mold (12).

22. The method of claim 21 further **characterized by** the steps of,
lowering said lock frame (142) until said first lock rod (144) engages said lock ring (145) at said quick connect coupling (146),
driving said first lock motor (143) thereby rotating said first lock rod (144) and connecting said first lock rod (144) to said lock ring (145) at said quick connect coupling (146), and,
lifting said lock ring (145) away from said mold (12).

## Patentansprüche

1. Reifen-Vulkanisier-System (10) mit einer Vielzahl von Formen (12), die jeweils eine untere Formhälfte (14) und eine obere Formhälfte (13) aufweisen, umfassend Lademittel (71) zum Einladen des Rohreifens (20) in die untere Formhälfte (14), Form-Schließmittel (34), um die obere Formhälfte (13) über die untere Formhälfte (14) zu setzen, Selbstverriegelungs-Mittel (15) zum Verriegeln der oberen Formhälfte (13) mit der unteren Formhälfte (14), Vulkanisiermittel (81) zum Vulkanisieren des Rohreifens (20), Form-Öffnungsmittel (35) zum Abnehmen der oberen Formhälfte (13) von der unteren Formhälfte (14), Entlademittel (72) zum Entladen eines vulkanisierten Reifens (22) von der unteren Formhälfte (14) und Abnahmemittel (17) zum Abnehmen des vulkanisierten Reifens (22) von dem Vulkanisier-System (10), wovon die Lademittel (71) und die Entlademittel (72) einen bewegbaren Roboter (40) enthalten und das Form-Schließmittel (34) und das Form-Öffnungsmittel (35) einen bewegbaren Manipulator (30) enthalten, wobei die Bewegungen des Roboters (40) und des Manipulators (30) geradlinig erfolgen, **dadurch gekennzeichnet, dass** das Vulkanisiersystem
in mindestens drei horizontal beabstandeten im wesentlichen parallelen Bearbeitungslinien angeordnet ist, einschließlich einer ersten Rohreifen-Zulieferbearbeitungslinie (56) zur Benutzung beim Zuliefern eines Rohreifens (20) zu dem Reifen-Vulkanisiersystem (10), einer zweiten Roboter-Reifenhandhabungs-Bearbeitungslinie (54), längs der ein Roboter (40) wahlweise beweglich ist, und
einer dritten Manipulator-Bearbeitungslinie (50), längs der ein Manipulator (30) wahlweise beweglich ist,
einer vierten Bearbeitungslinie, die eine Form-Lade/Entlade-Bearbeitungslinie (52) enthält zur Verwendung beim Einladen von Rohreifen (20) in die untere Formhälfte (14) und beim Entladen des vulkanisierten Reifens (22) von der unteren Formhälfte (14), wobei die Manipulator-Bearbeitungslinie (50) und die Form-Lade/Entlade-Bearbeitungslinie (52) eine einzige Bearbeitungslinie ist oder aus zwei benachbarten Bearbeitungslinien besteht.

2. Reifen-Vulkanisiersystem (10) nach Anspruch 1, weiter **dadurch gekennzeichnet, dass** die Roboter-Reifenhandhabungslinie zwischen der Rohreifenzuliefer-Bearbeitungslinie (56) und der Form-Lade/Entlade-Bearbeitungslinie (52) positioniert ist und die Manipulator-Bearbeitungslinie (50) zunächst der Form-Lade/Entlade-Bearbeitungslinie (52) positioniert ist.

3. Reifen-Vulkanisiersystem (10) nach Anspruch 1, weiter **dadurch gekennzeichnet, dass** jede der vier Bearbeitungslinien eine Vielzahl von Stationen besitzt und jede der vier Bearbeitungslinien die gleiche Anzahl der Stationen aufweist.

4. Reifen-Vulkanisiersystem (10) nach Anspruch 3, weiter **dadurch gekennzeichnet, dass** die untere Formhälfte (14) zwischen der Manipulator-Bearbeitungslinie (50) und der Form-Lade/Entlade-Bearbeitungslinie (52) überführbar ist.

5. Reifen-Vulkanisiersystem (10) nach Anspruch 4, weiter **dadurch gekennzeichnet, dass** das Vulkanisiermittel (81) einen Zentral-Mechanismus enthält, der zwischen der Manipulator-Bearbeitungslinie (50) und der Form-Lade/Entlade-Bearbeitungslinie (52) zusammen mit der unteren Formhälfte (14) überführbar ist.

6. Reifen-Vulkanisiersystem (10) nach Anspruch 1, weiter **dadurch gekennzeichnet, dass** ein Abnahmeförderer (16) zum Wegführen des vulkanisierten Reifens (22) von dem Reifen-Vulkanisiersystem (10) vorgesehen ist, welcher Abnahmeförderer (16) längs der Roboter-Reifenhandhabungslinie (54) positioniert ist.

7. Reifen-Vulkanisiersystem (10) nach Anspruch 6, weiter **dadurch gekennzeichnet, dass** der Abnahmeförderer (16) unter dem Roboter (40) in der Roboter-Bearbeitungslinie (56) positioniert ist.

8. Reifen-Vulkanisiersystem (10) nach Anspruch 1, weiter **dadurch gekennzeichnet, dass** die untere Formhälfte (14) eine Vielzahl von Segmenten (120) enthält, dass die obere Formhälfte (13) und die untere Formhälfte (14) eine segmentierte Form (12) bilden, dass der Manipulator (30) einen Betätiger-Mechanismus (130) zum Verriegeln und Entriegeln der oberen Formhälfte (13) und der unteren Formhälfte (14) enthält, und dass der Betätiger-Mechanismus (130) umfasst einen Betätiger-Zylinder (131) zum Anheben und Absenken des Betätiger-Mechanismus (130),
einen Betätiger-Ring (134), der selektiv die Segmente nach innen und nach außen gleiten lässt,
einen ersten Betätiger-Motor zum wahlweisen Rotierenlassen des Betätiger-Rings (134),
einen ersten Betätiger-Stab (137), der wirksam den ersten Betätiger-Motor (133) mit dem Betätigerring (134) verbindet, und
einen Betätiger-Rahmen (132) zum Abstützen des Betätiger-Rings (134), des ersten Betätiger-Motors (133) und des ersten Betätiger-Stabs (137).

9. Reifen-Vulkanisiersystem (10) nach Anspruch 8, weiter **dadurch gekennzeichnet, dass** jedes der Segmente einen Nockenfolger-Betätiger (121) zur Verwendung beim Gleitenlassen jedes der Segmente aufweist, und der Betätiger-Ring (134) umfasst
erste und zweite Betätiger-Keile zum wahlweisen Eingreifen bei jedem der Nockenfolger-Betätiger (121).

10. Reifen-Vulkanisiersystem (10) nach Anspruch 8, **dadurch gekennzeichnet, dass** das zum Öffnen und Schließen der segmentierten Form (12) erforderliche Verdrehungsmaß des Betätiger-Rings (134) in dem Bereich von 5° bis 15° liegt.

11. Reifen-Vulkanisiersystem (10) nach Anspruch 8, weiter **dadurch gekennzeichnet, dass** der Manipulator (30) umfasst:
einen Anbringungsrahmen (29) zur selektiven Anbringung an der oberen Formhälfte (13), wobei der Anbringungsrahmen (29) eine Vielzahl von Haken (28) aufweist,
eine Vielzahl von Winden (38) zum wahlweisen Anheben und Absenken des Anbringungsrahmens (29), wobei die Vielzahl von Winden (38) wirksam an einem oberen Glied (37) des Manipulators (30) angebracht ist,
Windenseile (39), die wirksam die Vielzahl von Winden (38) mit der Vielzahl von Haken (28) verbinden, und
eine Vielzahl von Zylindern mit Kolbenstangen, die sich wahlweise von dem oberen Glied (37) des Manipulators (30) zu dem Anbringungsrahmen (29) erstrecken, um den Anbringungsrahmen (29) bei seiner Bewegung mit dem Manipulator (30) zu stabilisieren.

12. Verfahren zum Vulkanisieren eines ersten Rohreifens (20) mit Benutzen eines Vulkanisiersystems mit vier horizontal beabstandeten im wesentlichen parallelen Bearbeitungslinien mit einer Vielzahl von Stationen längs jeder Bearbeitungslinie, wobei jede der vier Bearbeitungslinien die gleiche Anzahl von Stationen aufweist, die vier Bearbeitungslinien eine Manipulator-Bearbeitungslinie (50), eine Form-Lade/Entlade-Bearbeitungslinie (52), eine Roboter-Reifenhandhabungslinie (54) und eine Rohreifen-Zuliefer-Bearbeitungslinie (56) enthalten, **dadurch gekennzeichnet, dass** das Verfahren die Schritte umfasst, dass:
der erste Rohreifen (20) an einer ersten Station an der Rohreifen-Zuliefer-Bearbeitungslinie (56) abgelegt wird;
ein Roboter (40) längs der Roboter-Reifenhandhabungslinie (54) zu einer ersten Station an der Roboter-Reifenhandhabungslinie (54) bewegt wird;
ein Manipulator (30) längs der Manipulator-Bearbeitungslinie (50) zu einer ersten Station an der Manipulator-Bearbeitungslinie (50) bewegt wird;
eine erste obere Formhälfte (13) von einer ersten unteren Formhälfte (14), die an der ersten Station an der Manipulator-Bearbeitungslinie (50) positioniert ist, mit dem Manipulator (30) angehoben wird;
die erste untere Formhälfte (14) zu einer ersten Station an der Form-Lade/Entlade-Bearbeitungslinie (52) bewegt wird;
der erste Rohreifen (20) in die erste untere Formhälfte (14) mit dem Roboter (40) eingesetzt wird;
der Roboter (40) längs der Roboter-Reifenhandhabungslinie (54) in der erforderlichen Weise bewegt wird;
die erste untere Formhälfte (14) zu der ersten Station an der Manipulator-Bearbeitungslinie (50) bewegt wird;
die erste obere Formhälfte (13) in die erste untere Formhälfte (14) mit dem Manipulator (30) eingesetzt wird;
der Manipulator (30) längs der Manipulator-Bearbeitungslinie (50) in der erforderlichen Weise bewegt wird;
der erste Rohreifen (20) zu einem ersten vulkanisierten Reifen vulkanisiert wird;
der Manipulator (30) längs der Manipulator-Bearbeitungslinie (50) zu der ersten Station an der Manipulator-Bearbeitungslinie (50) bewegt wird;
die erste obere Formhälfte (13) von der ersten unteren Formhälfte (14) mit dem Manipulator (30) angehoben wird;
der Roboter (40) längs der Roboter-Reifenhandhabungslinie (54) zu der ersten Station an der Roboter-Reifenhandhabungslinie (54) bewegt wird;
die erste untere Formhälfte (14) zu der ersten Station der Form-Lade/Entlade-Bearbeitungslinie (52) bewegt wird;
der erste vulkanisierte Reifens von der ersten unteren Formhälfte (14) mit dem Roboter (40) entfernt wird;
die erste untere Formhälfte (14) zu der ersten Station an der Manipulator-Bearbeitungslinie (50) bewegt wird; und
der erste vulkanisierte Reifen in einen Abnahmeförderer (16) mit dem Roboter (40) eingesetzt wird.

13. Verfahren nach Anspruch 12, weiter **dadurch gekennzeichnet, dass** vor dem Schritt des Ablegens des ersten Rohreifens (20) an einer ersten Station an der Rohreifen-Zuliefer-Bearbeitungslinie (56) das Verfahren den Schritt umfasst,
dass der Rohreifen (20) an einer längs der Rohreifen-Zuliefer-Bearbeitungslinie (56) verlaufenden Einzelschiene (60) zu dem Vulkanisiersystem getragen wird.

14. Verfahren nach Anspruch 12, weiter **dadurch gekennzeichnet, dass** vor dem Schritt des Bewegens der ersten unteren Formhälfte (14) zu der ersten Station an der Manipulator-Bearbeitungslinie (50) das Verfahren den Schritt umfasst:
dass die Formung des ersten Rohreifens (20) mit einem Balg (86) beginnt.

15. Verfahren nach Anspruch 12, weiter **dadurch gekennzeichnet, dass** nach dem Schritt des Einsetzens der ersten oberen Formhälfte (13) über die erste untere Formhälfte (14) mit dem Manipulator (30) das Verfahren den Schritt umfasst:
dass die erste obere Formhälfte (13) mit dem Manipulator (30) mit der ersten unteren Formhälfte (14) verriegelt wird.

16. Verfahren nach Anspruch 12, weiter **dadurch gekennzeichnet, dass** nach dem Schritt des Bewegens des Roboters (40) längs der Roboter-Reifenhandhabungslinie (54) das Verfahren die Schritte umfasst:
dass ein zweiter Rohreifen (20) an einer zweiten Station an der Rohreifen-Zuliefer-Bearbeitungslinie (56) abgelegt wird, und
dass der Roboter (40) längs der Roboter-Reifenhandhabungslinie (54) zu einer zweiten Station an der Roboter-Reifenhandhabungslinie (54) bewegt wird.

17. Verfahren nach Anspruch 16, weiter **dadurch gekennzeichnet, dass** nach dem Schritt des Bewegens des Manipulators (30) längs der Manipulator-Bearbeitungslinie (50) zu der ersten Station das Verfahren die Schritte umfasst:
dass der Manipulator (30) längs der Manipulator-Bearbeitungslinie (50) zu einer zweiten Station an der Manipulator-Bearbeitungslinie (50) bewegt wird;
dass eine zweite obere Formhälfte (13) von einer zweiten an der zweiten Station an der Manipulator-Bearbeitungslinie (50) positionierten unteren Formhälfte (14) mit dem Manipulator (30) angehoben wird; dass die zweite untere Formhälfte (14) zu einer zweiten Station an der Form-Lade/Entlade-Bearbeitungslinie (52) bewegt wird;
dass ein zweiter Rohreifen (20) mit dem Roboter (40) in die zweite untere Formhälfte (14) eingesetzt wird;
dass die zweite untere Formhälfte (14) zu der zweiten Station an der Manipulator-Bearbeitungslinie (50) bewegt wird;
dass die zweite obere Formhälfte (13) mit dem Manipulator (30) über die zweite untere Formhälfte (14) gesetzt wird;
dass der Manipulator (30) in der erforderlichen Weise längs der Manipulator-Bearbeitungslinie (50) bewegt wird; und
dass der zweite Rohreifen (20) zu einem zweiten vulkanisierten Reifen vulkanisiert wird.

18. Verfahren nach Anspruch 17, weiter **dadurch gekennzeichnet, dass** nach dem Schritt des Setzens des ersten vulkanisierten Reifens (22) auf einen Abnahmeförderer (16) mit dem Roboter (40) das Verfahren die Schritte umfasst:
dass der Manipulator (30) längs der Manipulator-Bearbeitungslinie (50) zu der zweiten Station an der Manipulator-Bearbeitungslinie (50) bewegt wird;
dass die zweite obere Formhälfte (13) mit dem Manipulator (30) von der zweiten unteren Formhälfte (14) abgehoben wird;
dass der Roboter (40) längs der Roboter-Reifenhandhabungslinie (54) zu der zweiten Station bewegt wird;
dass die zweite untere Formhälfte (14) zu der zweiten Station an der Form-Lade/Entlade-Bearbeitungslinie (52) bewegt wird;
dass ein zweiter vulkanisierter Reifen (22) mit dem Roboter (40) von der zweiten unteren Formhälfte (14) entfernt wird;
dass die zweite untere Formhälfte (14) zu der zweiten Station an der Manipulator-Bearbeitungslinie (50) bewegt wird; und
dass der zweite vulkanisierte Reifen (22) mit dem Roboter (40) auf den Abnahmeförderer (16) gesetzt wird.

19. Segmentierte Reifenform (12), die eine obere Formhälfte (13) und eine untere Formhälfte (14) einschließlich einer Vielzahl von Segmenten (120) und Selbstverriegelungsmitteln (15) zum selektiven Verriegeln der oberen Formhälfte (13) mit der unteren Formhälfte (14) enthält, wobei das Selbstverriegelungsmittel (15) **gekennzeichnet ist durch**:
einen Verriegelungsrahmen (142),
einen ersten **durch** den Verriegelungsrahmen (142) abgestützten Verriegelungsmotor (143),
einen ersten drehbar mit dem ersten Verriegelungsmotor (143) verbundenen Verriegelungsstab (144), der eine Schnellverbindungskupplung (146) enthält,
einen Verriegelungsring (145) zur Verwendung beim Verhindern des Gleitens der Segmente (120) nach außen, wobei der Verriegelungsring (145) wahlweise mit dem ersten Verriegelungsstab (144) an der Schnellverbindungskupplung (146) verbunden ist, und
einen Verriegelungs-Zylinder (141), der zur Verwendung beim selektiven Anheben und Absenken des Verriegelungsrahmens (142) wirksam mit dem Verriegelungsrahmen (142), des ersten Verriegelungsmotors (143), des ersten Verriegelungsstabes (144) und des Verriegelungsringes (145) verbunden ist, wobei der Verriegelungs-Zylinder (141) **dadurch** wahlweise den Verriegelungsring (145) um die segmentierte Reifenform (12) setzt.

20. Segmentierte Reifenform (12) nach Anspruch 19, weiter **gekennzeichnet durch**
zweite und dritte **durch** den Verriegelungsrahmen (142) abgestützte Verriegelungsmotore (143),
zweite und dritte drehbar mit jeweils dem zweiten bzw. dritten Verriegelungsmotor (143) verbundene Verriegelungsstäbe (144), wobei die zweiten und dritten Verriegelungsstäbe (144) jeweils eine Schnellverbindungskupplung (146) enthalten,
wobei der Verriegelungsring (145) wahlweise mit dem zweiten und dem dritten Verriegelungsstab (144) an den Schnellverbindungskupplungen (146) verbunden ist, und
wobei der Verriegelungszylinder (141) wahlweise den zweiten und den dritten Verriegelungsmotor (143) und den zweiten und den dritten Verriegelungsstab (144) anhebt bzw. absenkt.

21. Verfahren zum Verriegeln einer Form (12) mit einer unteren Formhälfte (14), die eine Vielzahl von Segmenten (120) besitzt, und einer oberen Formhälfte (13), **gekennzeichnet durch** die Schritte:
dass ein Verriegelungs-Mechanismus (140) vorgesehen wird, der einen Verriegelungsrahmen (142), einen ersten **durch** den Verriegelungsrahmen (142) abgestützten Verriegelungsmotor (143), einen ersten drehbar mit dem ersten Verriegelungsmotor (143) verbundenen und eine Schnellverbindungskupplung (146) enthaltenden Verriegelungsstab, einen wahlweise mit dem ersten Verriegelungsstab (144) an der Schnellverbindungskupplung (146) verbindbaren Verriegelungsring (145) und einen wirksam mit dem Verriegelungsrahmen (142) verbundenen Verriegelungszylinder (141) enthält,
dass der Verriegelungsrahmen (142) abgesenkt wird, bis der Verriegelungsring (145) um die Vielzahl von Segmenten (120) positioniert ist,
dass der erste Verriegelungsmotor (143) angetrieben wird, um **dadurch** den ersten Verriegelungsstab (144) zu drehen und den ersten Verriegelungsstab (144) von dem Verriegelungsring (145) an der Schnellverbindungskupplung (146) zu trennen, und
dass der Verriegelungs-Mechanismus (140) von der Form (12) weg angehoben wird.

22. Verfahren nach Anspruch 21, weiter **gekennzeichnet durch** die Schritte:
dass der Verriegelungsrahmen (142) abgesenkt wird, bis der erste Verriegelungsstab (144) mit dem Verriegelungsring (145) an der Schnellverbindungskupplung (146) in Eingriff kommt,
dass der erste Verriegelungsmotor (143) angetrieben wird, um **dadurch** den ersten Verriegelungsstab (144) zu drehen und den ersten Verriegelungsstab (144) mit dem Verriegelungsring (145) an der Schnellverbindungskupplung (146) zu verbinden, und
dass der Verriegelungsring (145) von der Form (12) weg angehoben wird.

## Revendications

1. Système de vulcanisation de bandage pneumatique (10) comportant plusieurs moules (12) possédant chacun une moitié de moule inférieure (14) et une moitié de moule supérieure (13), comprenant des moyens de chargement (71) pour charger ledit bandage pneumatique (20) à l'état cru dans ladite moitié inférieure de moule (14), des moyens de fermeture de moule (34) pour placer ladite moitié de moule supérieure (13) par-dessus ladite moitié de moule inférieure (14), des moyens de verrouillage automatique (15) pour verrouiller ladite moitié de moule supérieure (13) à ladite moitié de moule inférieure (14), des moyens de vulcanisation (81) pour vulcaniser ledit bandage pneumatique (20) à l'état cru, des moyens d'ouverture de moule (35) pour écarter ladite moitié de moule supérieure (13) de ladite moitié de moule inférieure (14), des moyens de déchargement (72) pour décharger un bandage pneumatique à l'état vulcanisé (22) de ladite moitié de moule inférieure (14) et des moyens (17) destinés à emporter ledit bandage pneumatique vulcanisé (22) à partir dudit système de vulcanisation (10), lesdits moyens de chargement (71) et lesdits moyens de déchargement (72) englobant un robot mobile (40) et lesdits moyens de fermeture de moule (34) et lesdits moyens d'ouverture de moule (35) englobant un manipulateur mobile (30), dans lequel les mouvements dudit robot (40) et dudit manipulateur (30) s'effectuent en ligne droite, **caractérisé par le fait que** le système de vulcanisation
est arrangé dans au moins trois lignes de traitement espacées en direction horizontale et essentiellement parallèles, englobant
une première ligne de traitement (56) de distribution de bandage pneumatique à l'état cru à utiliser dans la distribution d'un bandage pneumatique (20) à l'état cru audit système de vulcanisation de bandage pneumatique (10),
une deuxième ligne de traitement (54) de manipulation de bandage pneumatique à l'aide d'un robot, le long de laquelle un robot (40) est mobile de manière sélective, et
une troisième ligne de traitement (50) à l'aide d'un manipulateur, le long de laquelle un manipulateur (30) est mobile de manière sélective,
une quatrième ligne de traitement englobant une ligne de traitement (52) de chargement - déchargement de moule à utiliser dans le chargement de bandage pneumatique (20) à l'état cru dans ladite moitié de moule inférieure (14) et pour le déchargement dudit bandage pneumatique (22) à l'état vulcanisé à partir de ladite moitié de moule inférieure (14), la ligne de traitement (50) à l'aide du manipulateur et la ligne de traitement (52) de chargement - déchargement de moule étant représentées par une seule ligne de traitement ou par deux lignes de traitement adjacentes.

2. Système de vulcanisation de bandage pneumatique (10) selon la revendication 1, **caractérisé en outre par le fait que** ladite ligne de manipulation de bandage pneumatique à l'aide d'un robot est positionnée entre ladite ligne de traitement (56) de distribution d'un bandage pneumatique à l'état cru et ladite ligne de traitement (52) de chargement - déchargement de moule, et ladite ligne de traitement (50) à l'aide d'un manipulateur étant positionnée à côté de ladite ligne de traitement de chargement - déchargement de moule (52).

3. Système de vulcanisation de bandage pneumatique (10) selon la revendication 1, **caractérisé en outre par le fait que** chacune desdites quatre lignes de traitement possède plusieurs postes et chacune desdites quatre lignes de traitement possède le même nombre desdits postes.

4. Système de vulcanisation de bandage pneumatique (10) selon la revendication 3, **caractérisé en outre par le fait que** ladite moitié de moule inférieure (14) peut être transférée entre ladite ligne de traitement (50) à l'aide d'un manipulateur et ladite ligne de traitement de chargement - déchargement de moule (52).

5. Système de vulcanisation de bandage pneumatique (10) selon la revendication 4, **caractérisé en outre par le fait que** lesdits moyens de vulcanisation (81) englobent un mécanisme de centrage qui peut être transféré entre ladite ligne de traitement (50) à l'aide d'un manipulateur et ladite ligne de traitement de chargement - déchargement de moule (52), de manière conjointe avec ladite moitié de moule inférieure (14).

6. Système de vulcanisation de bandage pneumatique (10) selon la revendication 1, **caractérisé en outre par**
un assemblage de transporteur d'enlèvement (16) pour emporter ledit bandage pneumatique à l'état vulcanisé (22) à partir dudit système de vulcanisation de bandage pneumatique (10), ledit assemblage de transporteur d'enlèvement (16) étant positionné le long de ladite ligne de manipulation de bandage pneumatique (54) à l'aide d'un robot.

7. Système de vulcanisation de bandage pneumatique (10) selon la revendication 6, **caractérisé en outre par le fait que** ledit assemblage de transporteur d'enlèvement (16) est positionné en dessous dudit robot (40) dans ladite ligne de traitement (56) à l'aide d'un robot.

8. Système de vulcanisation de bandage pneumatique (10) selon la revendication 1, **caractérisé en outre par le fait que** ladite moitié de moule inférieure (14) englobe plusieurs segments (120), ladite moitié de moule supérieure (13) et ladite moitié de moule inférieure (14) forment un moule segmenté (12), ledit manipulateur (30) englobe un mécanisme de commande (130) pour verrouiller et déverrouiller ladite moitié de moule supérieure (13) et ladite moitié de moule inférieure (14), et ledit mécanisme de commande (130) comprend
un cylindre de commande (131) pour soulever et abaisser ledit mécanisme de commande (130),
un anneau de commande (134) pour faire glisser de manière sélective lesdits segments vers l'intérieur et vers l'extérieur,
un premier moteur de commande pour la mise en rotation sélective dudit anneau de commande (134),
une première tige de commande (137) pour relier en entraînement ledit premier moteur de commande (133) audit anneau de commande (134), et
un cadre de commande (132) pour supporter ledit anneau de commande (134), ledit premier moteur de commande (133) et ladite première tige de commande (137).

9. Système de vulcanisation de bandage pneumatique (10) selon la revendication 8, **caractérisé en outre par le fait que** chacun desdits segments possède une commande (121) du type à contre-came à utiliser lors du glissement de chacun desdits segments, et ledit anneau de commande (134) comprend
des première et deuxième cales de fixation destinées à entrer en contact de manière sélective avec chacune desdites commandes du type à contre-came (121).

10. Système de vulcanisation de bandage pneumatique (10) selon la revendication 8, **caractérisé en outre par le fait que** l'étendue de la rotation dudit anneau de commande (134) requise pour ouvrir et fermer le moule segmenté (12) se situe dans la plage de 5° à 15°.

11. Système de vulcanisation de bandage pneumatique (10) selon la revendication 8, **caractérisé en outre par le fait que** ledit manipulateur (30) comprend :
un cadre de fixation (29) destiné à venir se fixer de manière sélective à la moitié de moule supérieure (13), ledit cadre de fixation 29 possédant plusieurs crochets (28),
plusieurs engins de levage (38) pour soulever et abaisser de manière sélective ledit cadre de fixation (29), lesdits plusieurs engins de levage (38) étant fixés en entraînement à un élément supérieur (37) dudit manipulateur (30),
des câbles d'engins de levage (39) reliant en entraînement lesdits plusieurs engins de levage (38) auxdits plusieurs crochets (28), et
plusieurs cylindres possédant des tiges de piston, qui s'étendent de manière sélective à partir dudit élément supérieur (37) dudit manipulateur (30) en direction dudit cadre de fixation (29) afin de stabiliser ledit cadre de fixation (29) au fur et à mesure de son déplacement avec ledit manipulateur (30).

12. Procédé de vulcanisation d'un premier bandage pneumatique (20) à l'état cru en utilisant un système de vulcanisation comportant quatre lignes de traitement espacées en direction horizontale et essentiellement parallèles, comprenant plusieurs postes le long de chaque ligne de traitement, chacune desdites quatre lignes de traitement possédant le même nombre de postes, lesdites quatre lignes de traitement englobant une ligne de traitement (50) à l'aide d'un manipulateur, une ligne de traitement de chargement - déchargement de moule (52), une ligne de manipulation de bandage pneumatique (54) à l'aide d'un robot et une ligne de traitement de distribution de bandage pneumatique à l'état cru (56), **caractérisé par le fait que** le procédé comprend les étapes consistant à :
déposer le premier bandage pneumatique (20) à l'état cru à un premier poste sur la ligne de traitement (56) de distribution de bandage pneumatique à l'état cru;
déplacer un robot (40) le long de la ligne de manipulation de bandage pneumatique (54) à l'aide d'un robot jusqu'à un premier poste sur la ligne de traitement de bandage pneumatique (54) à l'aide d'un robot;
déplacer un manipulateur 30 le long de la ligne de traitement (50) à l'aide d'un manipulateur jusqu'à un premier poste sur la ligne de traitement (50) à l'aide d'un manipulateur ;
soulever une première moitié de moule supérieure (13) à l'écart d'une première moitié de moule inférieure (14) positionnée audit premier poste sur la ligne de traitement (50) à l'aide d'un manipulateur, avec ledit manipulateur (30) ;
déplacer ladite première moitié de moule inférieure (14) jusqu'à un premier poste sur la ligne de traitement de chargement - déchargement de moule (52) ;
placer ledit premier bandage pneumatique (20) à l'état cru sur ladite première moitié de moule inférieure (14), avec ledit robot (40) ;
déplacer ledit robot (40) le long de ladite ligne de manipulation de bandage pneumatique (54) à l'aide d'un robot, en fonction des nécessités ;
déplacer ladite première moitié de moule inférieure (14) jusqu'audit premier poste sur ladite ligne de traitement (50) à l'aide d'un manipulateur ;
placer ladite première moitié de moule supérieure (13) sur ladite première moitié de moule inférieure (14), avec ledit manipulateur (30) ;
déplacer ledit manipulateur (30) le long de ladite ligne de traitement (50) à l'aide d'un manipulateur, en fonction des nécessités ;
vulcaniser le premier bandage pneumatique (20) à l'état cru pour obtenir un premier bandage pneumatique à l'état vulcanisé ;
déplacer ledit manipulateur (30) le long de ladite ligne de traitement (50) à l'aide d'un manipulateur jusqu'audit premier poste sur ladite ligne de traitement (50) à l'aide d'un manipulateur ;
soulever ladite première moitié de moule supérieure (13) à l'écart de ladite première moitié de moule inférieure (14), avec ledit manipulateur (30) ;
déplacer ledit robot (40) le long de ladite ligne de manipulation de bandage pneumatique (54) à l'aide d'un robot jusqu'audit premier poste sur ladite ligne de manipulation de bandage pneumatique (54) à l'aide d'un robot ;
déplacer ladite première moitié de moule inférieure (14) jusqu'audit premier poste de ladite ligne de traitement de chargement - déchargement de moule (52) ;
retirer ledit premier bandage pneumatique vulcanisé de ladite première moitié de moule inférieure (14), avec ledit robot (40) ;
déplacer ladite première moitié de moule inférieure (14) jusqu'audit premier poste sur ladite ligne de traitement (50) à l'aide d'un manipulateur ; et
placer ledit premier bandage pneumatique vulcanisé sur un transporteur d'enlèvement (16), avec ledit robot (40).

13. Procédé selon la revendication 12, **caractérisé en outre par le fait que**, avant de passer à l'étape consistant à déposer ledit premier bandage pneumatique (20) à l'état cru à un premier poste sur la ligne de traitement de distribution (56) de bandage pneumatique à l'état cru, le procédé comprend l'étape consistant à
transporter ledit bandage pneumatique (20) à l'état cru audit système de vulcanisation sur un monorail (60) qui s'étend le long de ladite ligne de traitement de distribution (60) de bandage pneumatique à l'état cru.

14. Procédé selon la revendication 12, **caractérisé en outre par le fait que**, avant de passer à l'étape consistant à déplacer ladite première moitié de moule inférieure (14) jusqu'audit premier poste sur ladite ligne de traitement (50) à l'aide d'un manipulateur, le procédé comprend l'étape consistant à
entamer le façonnement dudit premier bandage pneumatique (20) à l'état cru avec une vessie (86).

15. Procédé selon la revendication 12, **caractérisé en outre par le fait que**, après avoir placé ladite première moitié de moule supérieure (13) par-dessus ladite première moitié de moule inférieure (14), avec ledit manipulateur (30), le procédé comprend l'étape consistant à
verrouiller ladite première moitié de moule supérieure (13) à ladite première moitié de moule inférieure (14), avec ledit manipulateur (30).

16. Procédé selon la revendication 12, **caractérisé en outre par le fait que**, après l'étape consistant à déplacer ledit robot (40) le long de ladite ligne de manipulation de bandage pneumatique (54) à l'aide d'un robot, le procédé comprend les étapes consistant à
déposer un deuxième bandage pneumatique (20) à l'état cru à un deuxième poste sur ladite ligne de traitement de distribution (56) de bandage pneumatique à l'état cru ; et
déplacer ledit robot (40) le long de ladite ligne de manipulation de bandage pneumatique (54) à l'aide d'un robot, jusqu'à un deuxième poste sur ladite ligne de manipulation de bandage pneumatique (54) à l'aide d'un robot.

17. Procédé selon la revendication 16, **caractérisé en outre par le fait que**, après l'étape consistant à déplacer ledit manipulateur (30) le long de ladite ligne de traitement (50) à l'aide d'un manipulateur, jusqu'audit premier poste, le procédé comprend les étapes consistant à
déplacer ledit manipulateur (30) le long de ladite ligne de traitement (50) à l'aide d'un manipulateur jusqu'à un deuxième poste sur la ligne de traitement (50) à l'aide d'un manipulateur ;
soulever une deuxième moitié de moule supérieure (13) à l'écart d'une deuxième moitié de moule inférieure (14) positionnée audit deuxième poste sur la ligne de traitement (50) à l'aide d'un manipulateur, avec ledit manipulateur (30) ;
déplacer ladite deuxième moitié de moule inférieure (14) jusqu'à un deuxième poste sur ladite ligne de traitement de chargement - déchargement de moule (52) ;
placer un deuxième bandage pneumatique (20) à l'état cru dans ladite deuxième moitié de moule inférieure (14), avec ledit robot (40) ;
déplacer ladite deuxième moitié de moule inférieure (14) jusqu'audit deuxième poste sur ladite ligne de traitement (50) à l'aide d'un manipulateur ;
placer ladite deuxième moitié de moule supérieure (13) par-dessus ladite deuxième moitié de moule inférieure (14), avec ledit manipulateur (30) ;
déplacer ledit manipulateur (30) le long de ladite ligne de traitement (50) à l'aide d'un manipulateur, en fonction des nécessités ; et
vulcaniser ledit deuxième bandage pneumatique (20) à l'état cru pour obtenir un deuxième bandage pneumatique à l'état vulcanisé.

18. Procédé selon la revendication 17, **caractérisé en outre par le fait que**, après l'étape consistant à placer ledit premier bandage pneumatique (22) à l'état vulcanisé sur un transporteur d'enlèvement (16), avec ledit robot (40), le procédé comprend les étapes consistant à
déplacer ledit manipulateur (30) le long de ladite ligne de traitement (50) à l'aide d'un manipulateur jusqu'audit deuxième poste sur ladite ligne de traitement (50) à l'aide d'un manipulateur ;
soulever ladite deuxième moitié de moule supérieure (13) à l'écart de ladite deuxième moitié de moule inférieure (14), avec ledit manipulateur (30) ;
déplacer ledit robot (40) le long de ladite ligne de manipulation de bandage pneumatique (54) jusqu'audit deuxième poste ;
déplacer ladite deuxième moitié de moule inférieure (14) jusqu'audit deuxième poste de ladite ligne de traitement de chargement - déchargement de moule (52) ;
retirer ledit deuxième bandage pneumatique vulcanisé (22) de ladite deuxième moitié de moule inférieure (14), avec ledit robot (40) ;
déplacer ladite deuxième moitié de moule inférieure (14) jusqu'audit deuxième poste sur ladite ligne de traitement (50) à l'aide d'un manipulateur ; et
placer ledit deuxième bandage pneumatique vulcanisé (22) sur un transporteur d'enlèvement (16), avec ledit robot (40).

19. Moule segmenté (12) pour bandage pneumatique, comprenant une moitié de moule supérieure (13) et une moitié de moule inférieure (14) englobant plusieurs segments (120) et des moyens de verrouillage automatique (15) pour verrouiller de manière sélective ladite moitié de moule supérieure (13) à ladite moitié de moule inférieure (14), ledit moyen de verrouillage automatique (15) étant **caractérisé par**
un cadre de verrouillage (142),
un premier moteur de verrouillage (143) supporté par ledit cadre de verrouillage (142),
une première tige de verrouillage (144) reliée en rotation audit premier moteur de verrouillage (143) et englobant un accouplement du type à connexion rapide (146),
un anneau de verrouillage (145) à utiliser pour empêcher lesdits segments (120) de glisser vers l'extérieur, ledit anneau de verrouillage (145) étant relié de manière sélective à ladite première tige de verrouillage (144) audit accouplement du type à connexion rapide (146), et
un cylindre de verrouillage (141) relié en entraînement audit cadre de verrouillage (142), à utiliser pour soulever et abaisser de manière sélective ledit cadre de verrouillage (142), ledit premier moteur de verrouillage (143), ladite première tige de verrouillage (144) et ledit anneau de verrouillage (145), ledit cylindre de verrouillage (141) plaçant ainsi de manière sélective ledit anneau de verrouillage (145) autour dudit moule segmenté (12) pour bandage pneumatique.

20. Moule segmenté (12) pour bandage pneumatique selon la revendication 19, **caractérisé en outre par**
des deuxième et troisième moteurs de verrouillage (143) supportés par ledit cadre de verrouillage (142),
des deuxième et troisième tiges de verrouillage (144) reliées en rotation auxdits deuxième et troisième moteurs de verrouillage (143) respectivement, lesdites deuxième et troisième tiges de verrouillage (144) englobant chacune un accouplement (146) du type à connexion rapide,
dans lequel ledit anneau de verrouillage (145) est relié de manière sélective auxdites deuxième et troisième tiges de verrouillage (144) auxdits accouplements (146) du type à connexion rapide, et
dans lequel ledit cylindre de verrouillage (141) soulève et abaisse de manière sélective lesdits deuxième et troisième moteurs de verrouillage (143) et lesdites deuxième et troisième tiges de verrouillage (144).

21. Procédé pour verrouiller un moule (12) comportant une première moitié inférieure (14) possédant plusieurs segments (120) et une moitié de moule supérieure (13), **caractérisé par** les étapes consistant à
procurer un mécanisme de verrouillage (140) qui englobe un cadre de verrouillage (142), un premier moteur de verrouillage (143) supporté par ledit cadre de verrouillage (142), une première tige de verrouillage (144) reliée en rotation audit premier moteur de verrouillage (144) et englobant un accouplement (146) du type à connexion rapide, un anneau de verrouillage (145) apte à être relié de manière sélective à ladite première tige de verrouillage (144) audit accouplement (146) du type à connexion rapide, et un cylindre de verrouillage (141) relié en entraînement audit cadre de verrouillage (142),
abaisser ledit cadre de verrouillage (142) jusqu'à ce que ledit anneau de verrouillage (145) vienne se positionner autour desdits plusieurs segments (120),
entraîner ledit premier moteur de verrouillage (143) pour ainsi faire tourner ladite première tige de verrouillage (144) et déconnecter ladite première tige de verrouillage (144) dudit anneau de verrouillage (145) audit accouplement (146) du type à connexion rapide, et
soulever ledit mécanisme de verrouillage (140) à l'écart du moule (12).

22. Procédé selon la revendication 21, **caractérisé en outre par** les étapes consistant à
abaisser ledit cadre de verrouillage (142) jusqu'à ce que ladite première tige de verrouillage (144) entre en contact avec ledit anneau de verrouillage (145) audit accouplement (146) du type à connexion rapide,
entraîner ledit premier moteur de verrouillage (143) pour ainsi faire tourner ladite première tige de verrouillage (144) et relier ladite première tige de verrouillage (144) audit anneau de verrouillage (145) audit accouplement (146) du type à connexion rapide, et
soulever ledit anneau de verrouillage (145) à l'écart dudit moule (12).
